# EUROPEAN PATENT APPLICATION

(11) **EP 2 416 473 A2**
(43) Date of publication of application: **08.02.2012**
(21) Application number: 11173777.1
(22) Date of filing: 13.07.2011
(51) Int. Cl.: H02M 1/00

(54) **Series power module**

(30) Priority: 20.07.2010 US 839801
(71) Applicant: General Electric Company, Schenectady, NY 12345 (US)
(72) Inventor: Dougherty, John James, Plainville, CT Connecticut 06062 (US); Fernandez, Ricardo Cabal, 28938 Mostoles (ES); Parellada, Josep Pijoan, 28938 Mostoles (ES); Pozancos, Andres San Segundo, 28938 Mostoles (ES); Venkatnaraisimha, Nadipuram, 6595 Riazzino (CH)
(74) Representative: Illingworth-Law, William Illingworth

(57) **Abstract**

A power module includes a switch portion (214) operative to switch an alternating current (A/C) voltage, a rectifier portion (208) operative to receive the switched A/C voltage, rectify the switched A/C voltage, and output a direct current (D/C) voltage, a power control module (206) operative to receive the D/C voltage and to charge a voltage storage device, and a controller portion (212), configured to be powered by the D/C voltage from the voltage storage device, operative to receive an external control signal and control a state of the switch portion (214).

## Description

### BACKGROUND OF THE INVENTION

The subject matter disclosed herein relates to power modules and particularly to power modules with remote control.

Remote power control may be used in wiring applications to control numerous devices in a wiring system. For example, in a residential wiring application, one or more electrical outlets may be controlled or switched via a remote module that may be located in a junction box. The remote module may send signals to an electrical outlet that in turn receives the signals and switches the state of the outlet. Previous remote modules included a direct current (DC) power source such as a battery that provided DC power to a transceiver for sending and receiving signals. The use of a battery in such modules necessitated the monitoring and replacement of the battery when the battery charge was consumed.

### BRIEF DESCRIPTION OF THE INVENTION

According to one aspect of the invention, a power module includes a switch portion operative to switch an alternating current (A/C) voltage, a rectifier portion operative to receive the switched A/C voltage, rectify the switched A/C voltage, and output a direct current (D/C) voltage, a power control module operative to receive the D/C voltage and to charge a voltage storage device, and a controller portion, configured to be powered by the D/C voltage from the voltage storage device, operative to receive an external control signal and control a state of the switch portion.

According to another aspect of the invention, a system for controlling power includes a switch portion arranged in a phased current path, a rectifier portion arranged in parallel to the switch portion operative to receive an A/C voltage, rectify the A/C voltage, and output a D/C voltage to a node in the phased current path, a power control module operative to receive the D/C voltage from the rectifier and to charge a capacitor, and a controller portion powered by the D/C voltage from the capacitor, operative to receive a control signal and control a state of the switch portion.

According to yet another aspect of the invention, a method for controlling a power system includes receiving alternating current (A/C) voltage from an A/C voltage source rectifying the A/C voltage into direct current (D/C) voltage, determining whether a portion of the A/C voltage is below an A/C voltage threshold level, charging a voltage storage device with the D/C voltage responsive to determining that the A/C voltage is below the A/C voltage threshold level, sending a portion of the A/C voltage from the voltage source to a load while simultaneously rectifying the A/C voltage into D/C voltage, powering a transceiver and a controller with D/C voltage from the voltage storage device, and changing a state of a switching device responsive to receiving a control signal with the transceiver.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 illustrates a prior art example of a wiring arrangement.

FIG. 2 illustrates a high-level block diagram of an exemplary embodiment of a power module system.

FIG. 3 illustrates a circuit diagram of an exemplary embodiment of the control module of FIG. 2.

The detailed description explains embodiments of the invention, together with advantages and features, by way of example with reference to the drawings.

### DETAILED DESCRIPTION OF THE INVENTION

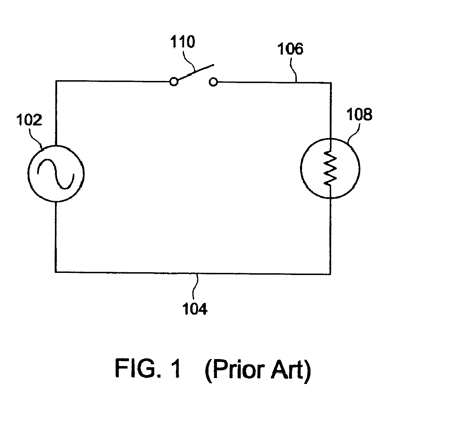

FIG. 1 illustrates a prior art example of a wiring arrangement in a typical residential or commercial application. In this regard, An alternating current (A/C) source 102 provides power along a neutral line 104 and a phased line 106 to a load 108 such as, for example, an incandescent or fluorescent lighting fixture or an appliance. The phased line 106 voltage is interruptible by a switch 110.

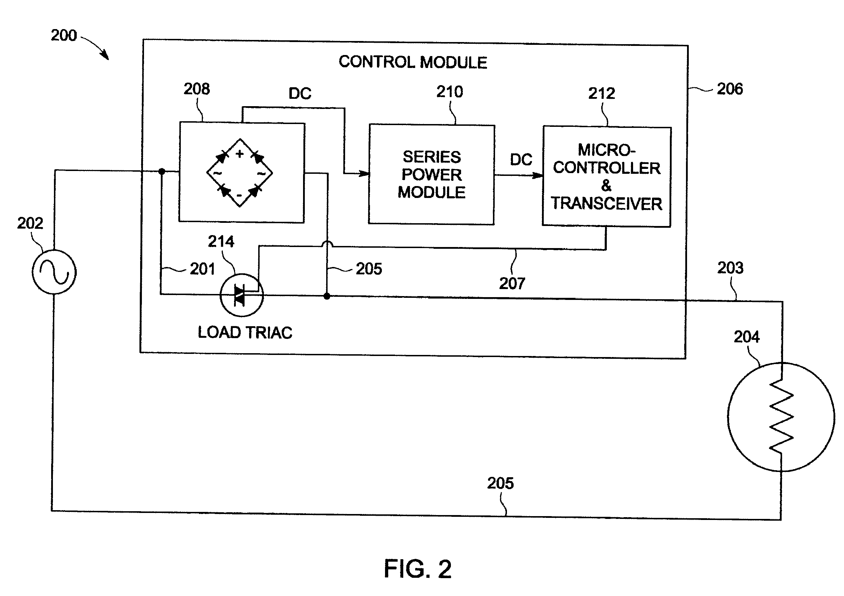

FIG. 2 illustrates a high-level block diagram of an exemplary embodiment of a power module system 200. The system 200 includes an A/C power source 202 such as, for example, a 110 or 230 VAC (Voltage A/C) source, connected to a load 204, such as, for example, a lighting fixture or an appliance via a phased power line 203 (phased current path) and a neutral power line 205 (neutral current path). A power control module 206 is disposed between the A/C power source 202 and the load 204 on the phased power line 203. The power control module 206 includes a bridge rectifier portion 208, a series power module 210 portion, a microcontroller and receiver portion 212. A load switching portion 214 is arranged in parallel with the bridge rectifier portion 208. In the illustrated embodiment, the load switching portion 214 includes a triac alternating current device, however any appropriate switching device may be used. The receiver portion 212 may include, for example, a wireless transceiver or receiver or a wired transceiver or receiver. The load-switching portion 214 is controlled by the microcontroller and receiver portion 212 and is arranged to switchably interrupt A/C power from the A/C power source 202 to the load 204.

In operation, when the microcontroller and receiver portion 212 receives a control signal (from an external source, not shown), the microcontroller and receiver portion 212 switches the load switching portion 214 via a line 207 into a closed state that allows A/C current from the A/C power source 202 follow the current path 201 to power the load 204. In an embodiment, the external source providing the control signal may include, for example, a testing device capable of outputting and receiving signals. The microcontroller and receiver portion 212 may switch the state of the load-switching portion 214 into an open state that interrupts the current path 205 to the load 204. A current path 205 connects the bridge rectifier portion 208 to the load 204. The bridge rectifier portion 208 rectifies A/C power into D/C power and outputs D/C power to the series power module 210. The series power module 210 includes voltage storage devices such as capacitors, for example, (described below) that are charged by the received D/C power. The series power module outputs D/C power to the microcontroller and receiver portion 212. The arrangement of the A/C power source 202, the bridge rectifier portion 208, the current path 205, and the load 204 allows a flow of current through the bridge rectifier portion 208 even when the load-switching portion 214 is in a closed state. Thus, when the load-switching portion 214 is in a closed state, small amount of current flows through the load 204 allowing the bridge rectifier portion 208 to output D/C power to the series power module 210.

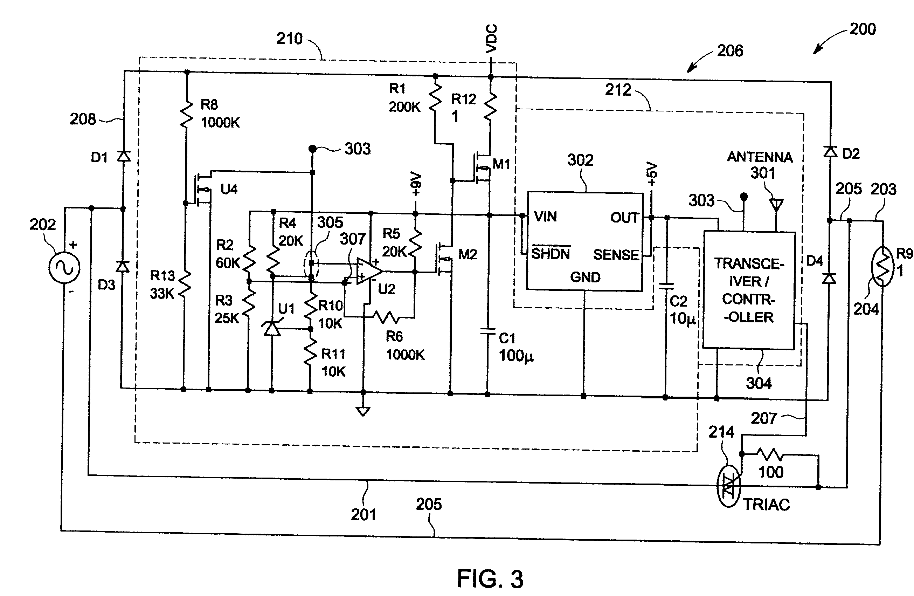

FIG. 3 illustrates a circuit diagram of an exemplary embodiment of the power module system 200 including the power control module 206 (of FIG. 2). The bridge rectifier portion 208 includes diodes (D1, D2, D3, and D4). The microcontroller and receiver portion 212 includes a series regulator 302 and a transceiver/controller 304. The series regulator 302 may include, for example, a low dropout (LDO) device that is operative to regulate the received D/C voltage. The transceiver/controller 304 may be connected to an antenna 301, or a line signal source 303 and may include a microcontroller for logic operations.

The power control module 206 includes a capacitor C1 that receives rectified D/C voltage via a resistor R12 and a transistor M1. The capacitor outputs D/C voltage to the microcontroller 302, which in turn, outputs D/C voltage to the transceiver/controller 304. A capacitor C2 may be arranged in parallel with the transceiver/controller 304 to smooth the D/C voltage received by the microcontroller and receiver portion 212.

The transistor M1 acts as a switch that is in a closed state during the initial positive and negative periods of the A/C voltage cycle, charging the capacitor C1. The state of the transistor M1 is controlled by a transistor M2 that is connected to the gate terminal of the transistor M1 and the rectified D/C voltage via a resistor R1. The gate terminal of the transistor M2 is connected to a comparator U2. The comparator U2 is arranged with resistors R2, R3, R4, R6, and R5 to compare the voltage provided to the capacitor C1 with a reference voltage (threshold voltage) regulated by a shunt regulator U1 arrangement that includes resistors R10, R11, and R4. When the voltage at the node 307 is greater than the voltage at the node 305 the comparator outputs a voltage to the transistor M2. The states of the transistors M1 and M2 are related such that when the transistor M1 is closed, the transistor M2 is open, and conversely, when the transistor M1 is open, the transistor M2 is closed.

The power control module 206 may include a transistor U4 arranged with resistors R8 and R13 that is connected to the comparator U2. If the voltage increases beyond a threshold (determined by the value of the resistors R8 and R13), the comparator U2 outputs a signal that will in-turn prevent the increased voltage from charging the capacitor C1.

The technical effects and benefits of the system include providing D/C power to a transceiver and controller connected to a phased power line, where the transceiver and controller is operative to receive signals and control the switching of A/C power to a load.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A power module including:
   a switch portion operative to switch an alternating current (A/C) voltage;
   a rectifier portion operative to receive the switched A/C voltage, rectify the switched A/C voltage, and output a direct current (D/C) voltage;
   a power control module operative to receive the D/C voltage and to charge a voltage storage device; and
   a controller portion, configured to be powered by the D/C voltage from the voltage storage device, operative to receive an external control signal and control a state of the switch portion.
2. The module of clause 1, wherein the rectifier portion is further operative to output the D/C voltage to power a load while rectifying the A/C voltage.
3. The module of clause 1 or clause 2, wherein the rectifier portion is further operative to simultaneously output the D/C voltage to the power control module and A/C voltage to the load.
4. The module of any preceding clause, wherein the module includes a comparative circuit arranged to compare the D/C voltage to a reference D/C voltage.
5. The module of any preceding clause, wherein the switch portion includes a triac alternating current device.
6. The module of any preceding clause, wherein the controller portion includes a voltage regulator operative to regulate the D/C voltage.
7. The module of any preceding clause, wherein the voltage regulator includes a low dropout voltage regulator.
8. The module of any preceding clause, wherein the module includes a transceiver operative to receive the control signal.
9. The module of any preceding clause, wherein the rectifier portion receives the A/C voltage from a phased line of a power circuit.
10. A system for controlling power including:
   a switch portion arranged in a phased current path;
   a rectifier portion arranged in parallel to the switch portion operative to receive an A/C voltage, rectify the A/C voltage, and output a D/C voltage to a node in the phased current path;
   a power control module operative to receive the D/C voltage from the rectifier and to charge a capacitor; and
   a controller portion powered by the D/C voltage from the capacitor, operative to receive a control signal and control a state of the switch portion.
11. The system of clause 10, wherein the rectifier portion is further operative to output the A/C voltage to a load while rectifying the A/C voltage.
12. The system of clause 10 or clause 11, wherein the rectifier portion is further operative to simultaneously output the D/C voltage to the power control module and A/C voltage to the load.
13. The system of any of clauses 10 to 12, wherein the module includes a comparative circuit arranged to compare the D/C voltage to a reference D/C voltage.
14. The system of any of clauses 10 to 13, wherein the power control module is operative to cease charging the capacitor responsive to determining that the D/C voltage exceeds a threshold voltage level.
15. The system of any of clauses 10 to 14, wherein the switch portion includes a triac alternating current device.
16. The system of any of clauses 10 to 15, wherein the controller portion includes a voltage regulator operative to regulate the D/C voltage.
17. The system of any of clauses 10 to 16, wherein the module includes a transceiver operative to receive the control signal.
18. The system of any of clauses 10 to 17, wherein the rectifier portion receives the A/C voltage from a phased line of a power circuit.
19. A method for controlling a power system, the method including:
   receiving alternating current (A/C) voltage from an A/C voltage source;
   rectifying the A/C voltage into direct current (D/C) voltage;
   determining whether a portion of the A/C voltage is below an A/C voltage threshold level;
   charging a voltage storage device with the D/C voltage responsive to determining that the A/C voltage is below the A/C voltage threshold level;
   sending a portion of the A/C voltage from the voltage source to a load while simultaneously rectifying the A/C voltage into D/C voltage;
   powering a transceiver and a controller with D/C voltage from the voltage storage device; and
   changing a state of a switching device responsive to receiving a control signal with the transceiver.
20. The method of clause 19, wherein the A/C voltage source includes a phased power line.

## Claims

1. A power module including:
a switch portion (214) operative to switch an alternating current (A/C) voltage;
a rectifier portion (208) operative to receive the switched A/C voltage, rectify the switched A/C voltage, and output a direct current (D/C) voltage;
a power control module (206) operative to receive the D/C voltage and to charge a voltage storage device; and
a controller portion (212), configured to be powered by the D/C voltage from the voltage storage device, operative to receive an external control signal and control a state of the switch portion (214).

2. The module of claim 1, wherein the rectifier portion (208) is further operative to output the D/C voltage to power a load (204) while rectifying the A/C voltage.

3. The module of claim 1 or claim 2, wherein the rectifier portion (208) is further operative to simultaneously output the D/C voltage to the power control module and A/C voltage to the load (204).

4. The module of any preceding claim, wherein the module includes a comparative circuit arranged to compare the D/C voltage to a reference D/C voltage.

5. The module of any preceding claim, wherein the switch portion (214) is a triac alternating current device.

6. The module of any preceding claim, wherein the controller portion (212) includes a voltage regulator operative to regulate the D/C voltage.

7. The module of any preceding claim, wherein the voltage regulator is a low dropout voltage regulator.

8. The module of any preceding claim, wherein the module includes a transceiver (304) operative to receive the control signal.

9. The module of any preceding claim, wherein the rectifier portion (208) receives the A/C voltage from a phased line (203) of a power circuit.

10. A system for controlling power including:
a switch portion arranged in a phased current path;
a rectifier portion arranged in parallel to the switch portion operative to receive an A/C voltage, rectify the A/C voltage, and output a D/C voltage to a node in the phased current path;
a power control module operative to receive the D/C voltage from the rectifier and to charge a capacitor; and
a controller portion powered by the D/C voltage from the capacitor, operative to receive a control signal and control a state of the switch portion.

11. The system of claim 10, wherein the rectifier portion is further operative to output the A/C voltage to a load while rectifying the A/C voltage.

12. The system of claim 10 or claim 11, wherein the rectifier portion is further operative to simultaneously output the D/C voltage to the power control module and A/C voltage to the load.

13. The system of any of claims 10 to 12, wherein the module includes a comparative circuit arranged to compare the D/C voltage to a reference D/C voltage.

14. A method for controlling a power system, the method including:
receiving alternating current (A/C) voltage from an A/C voltage source;
rectifying the A/C voltage into direct current (D/C) voltage;
determining whether a portion of the A/C voltage is below an A/C voltage threshold level;
charging a voltage storage device with the D/C voltage responsive to determining that the A/C voltage is below the A/C voltage threshold level;
sending a portion of the A/C voltage from the voltage source to a load while simultaneously rectifying the A/C voltage into D/C voltage;
powering a transceiver and a controller with D/C voltage from the voltage storage device; and
changing a state of a switching device responsive to receiving a control signal with the transceiver.

15. The method of claim 14, wherein the A/C voltage source includes a phased power line.
